# EUROPÄISCHE PATENTSCHRIFT

(11) **EP 1 657 134 B1**
(45) Veröffentlichungstag und Bekanntmachung des Hinweises auf die Patenterteilung: **23.04.2008**
(21) Anmeldenummer: 05108614.8
(22) Anmeldetag: 19.09.2005
(51) Int. Cl.: B61D 17/10, B61D 17/18, F16F 1/52, B62D 29/04, B60N 2/015

(54) **Bauteil für das Befestigen von Komponenten an der tragenden Bodenstruktur eines Wagenkastens, insbesondere eines Schienenfahrzeuges**
Element for fixing of components to a load-bearing floor structure, especially of a railway vehicle.
Elément pour la fixation de composants à une structure porteuse de plancher, notamment de véhicule ferroviaire.

(30) Priorität: 15.11.2004 DE 102004055011
(43) Veröffentlichungstag der Anmeldung: 17.05.2006
(73) Patentinhaber: SIEMENS AKTIENGESELLSCHAFT, 80333 München (DE)
(72) Erfinder: Wanczura, Stefan, 45665, Recklinghausen (DE)

(56) Entgegenhaltungen:
- EP-A- 0 063 214
- WO-A-01/05640
- US-B1- 6 361 030

## Beschreibung

Die Erfindung betrifft ein Bauteil für das Befestigen von Komponenten, wie Fahrgastsitzen, Trennwänden oder dergleichen, an der tragenden Bodenstruktur eines Wagenkastens, insbesondere eines Schienenfahrzeuges, gebildet aus zwei übereinander angeordneten schienenförmigen Körpern, die durch eine Schicht aus elastischem Werkstoff miteinander verbunden sind, wobei der untere Körper an der tragenden Bodenstruktur festlegbar ist und der obere Körper eine C-förmige Nut beinhaltet, an der die Komponente über zumindest einen Nutenstein anzuschließen ist.

Ein derartiges Bauteil wird z.B. in der WO-A-01/05640 beschrieben.

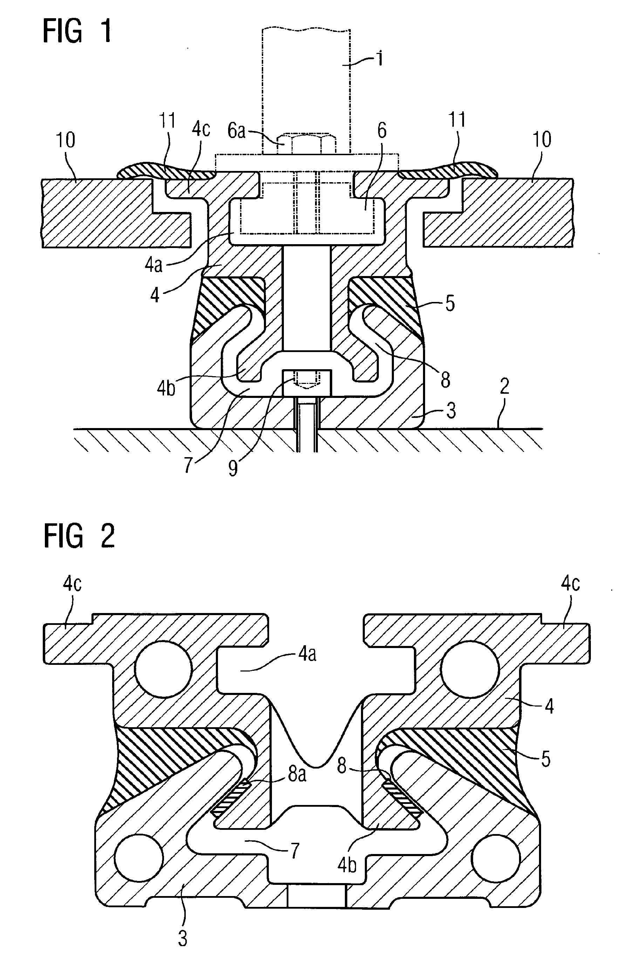

Durch die Patentschrift EP 0 063 214 B1 ist ein weiteres Bauteil mit den zuvor genannten Gattungsmerkmalen bekannt. Gemäß der in Fig. 1 dieser Schrift dargestellten Bauweise ist der untere schienenförmige Körper durch Kleben an der tragenden Bodenstruktur befestigt. Mit diesem unteren Körper ist über eine als Gummidämpfungselement bezeichnete elastische Schicht ein ebenfalls schienenförmiger oberer Körper verbunden, der eine C-förmige Nut enthält. Das Befestigen der Komponente erfolgt mittels eines in dieser C-förmigen Nut festlegbaren Nutensteins, wie dies in Fig. 4 für den Fuß eines Fahrgastsitzes gezeigt ist. Ein Nachteil dieser bekannten Bauweise liegt darin, dass die elastische Schicht aufwärts gerichteten Bewegungen des oberen Körpers und der daran angeschlossenen Komponente nur wenig Widerstand entgegenzusetzen vermag, wobei speziell bei einem Unfall auftretende hohe Kräfte ein Abreißen der elastischen Schicht und dadurch ein Umherschleudern der Komponenten im Fahrgastraum zur Folge haben können.

Der Erfindung liegt daher die Aufgabe zugrunde, ein Bauteil der gattungsgemäßen Art auf möglichst einfache Weise so zu gestalten, dass die Komponente auch bei extremen Belastungen sicher mit der tragenden Bodenstruktur verbunden bleibt.

Diese Aufgabe wird erfindungsgemäß dadurch gelöst, dass der obere Körper einen die Schicht aus elastischem Werkstoff durchdringenden und in den unteren Körper eingreifenden Ansatz aufweist, wobei dieser Ansatz und der untere Körper derart geformt sind, dass für das Begrenzen von Aufwärtsbewegungen des oberen Körpers ein oberer Anschlag gebildet ist.

Vorteilhafte Ausgestaltungen der Erfindung sind in den Unteransprüchen angegeben.

Im Weiteren wird die Erfindung anhand von Ausführungsbeispielen näher beschrieben, die in der Zeichnung prinzipartig dargestellt sind. Es zeigen
- Fig. 1: einen Ausschnitt des Bodens eines Wagenkastens mit einem erfindungsgemäßen Befestigungsbauteil im Querschnitt,
- Fig. 2: eine Variante des Befestigungsbauteils, ebenfalls im Querschnitt.

Auf einer tragenden Bodenstruktur 2 sind begehbare Fußbodenplatten 10 in üblicher Weise abgestützt, beispielsweise durch in der eingangs genannten EP 0 063 214 B1 beschriebene Hartschaumplatten (hier nicht gezeichnet), die eine gute Wärme- und Körperschallisolierung erbringen.

Ein Bauteil für das Befestigen von Komponenten 1, wie z. B. Fahrgastsitzen oder Trennwänden, ist aus zwei übereinander angeordneten schienenförmigen Körpern 3 und 4 gebildet, die jeweils aus einem Aluminium-Strangpressprofil bestehen können. Die Körper 3 und 4 sind im Hinblick auf eine schwingungstechnische Entkoppelung durch eine angeklebte oder anvulkanisierte Schicht 5 aus elastischem Werkstoff miteinander verbunden. Der untere Körper 3 ist an der tragenden Bodenstruktur 2 durch Kleben oder wie dargestellt durch Befestigungsschrauben 9 festlegbar. Der obere Körper 4 beinhaltet eine C-förmige Nut 4a, an der die Komponente 1 (hier der Fuß eines Fahrgastsitzes) über zumindest einen Nutenstein 6 und eine Schraube 6a angeschlossen ist. Der obere Körper 4 kann im Bereich seiner C-förmigen Nut 4a für die Aufnahme eines Kabels und/oder eines Lichtbandes ausgebildet sein, und zwar insbesondere durch eine Nutbreite, die größer ist als die Breite des Nutensteins 6.

Der obere Körper 4 weist einen Ansatz 4b auf, der die Schicht 5 aus elastischem Werkstoff durchdringt und in den unteren Körper 3 eingreift. Dieser Ansatz 4b und der untere Körper 3 sind derart geformt, dass für das Begrenzen senkrechter Bewegungen des oberen Körpers 4 mitsamt der Komponente 1 einerseits ein unterer Anschlag 7 und andererseits ein oberer Anschlag 8 gebildet sind. Der obere Anschlag 8 wirkt vorteilhaft als Abhebesicherung insbesondere bei extremen Belastungen, so dass selbst bei einem Umkippen des Fahrzeuges aufgrund eines Unfalls die Verbindung der Komponente 1 mit der Bodenstruktur 2 erhalten bleibt. Wie aus Fig. 2 erkennbar ist, kann dem oberen Anschlag 8 eine elastisch wirksame Anschlagschicht 8a zugeordnet sein. Eine entsprechende Anschlagschicht ist auch in Verbindung mit dem unteren Anschlag 7 möglich.

Außerdem weist der obere Körper 4 seitlich angeordnete Leisten 4c auf, von denen jede mit einer Fußbodenplatte 10 in Aufwärtsrichtung zusammenwirkt und auf diese Weise ebenfalls eine Abhebesicherung bildet. An der Oberseite jeder Leiste 4c ist eine Dichtlippe 11 durch Vulkanisieren oder Kleben gehalten, die den Randbereich der zugehörigen Fußbodenplatte 10 überdeckt.

Die Spiele zwischen den Bauteilen 3 und 4 im Bereich ihrer Anschläge 7 und 8 und zwischen dem oberen Bauteil 4 und den Fußbodenplatten 10 sind in der Fig. 1 bewusst groß dargestellt, um das jeweilige Zusammenwirken leichter erkennbar zu machen. Es versteht sich, dass diese Spiele in der Wirklichkeit geringer bemessen sein können.

## Patentansprüche

1. Bauteil für das Befestigen von Komponenten (1), wie Fahrgastsitzen, Trennwänden oder dergleichen, an der tragenden Bodenstruktur (2) eines Wagenkastens, insbesondere eines Schienenfahrzeuges, gebildet aus zwei übereinander angeordneten schienenförmigen Körpern (3, 4), die durch eine Schicht (5) aus elastischem Werkstoff miteinander verbunden sind, wobei der untere Körper (3) an der tragenden Bodenstruktur (2) festlegbar ist und der obere Körper (4) eine C-förmige Nut (4a) beinhaltet, an der die Komponente (1) über zumindest einen Nutenstein (6) anzuschließen ist, **dadurch gekennzeichnet, dass** der obere Körper (4) einen die Schicht (5) aus elastischem Werkstoff durchdringenden und in den unteren Körper (3) eingreifenden Ansatz (4b) aufweist, wobei dieser Ansatz (4b) und der untere Körper (3) derart geformt sind, dass für das Begrenzen von Aufwärtsbewegungen des oberen Körpers (4) ein oberer Anschlag (8) gebildet ist.

2. Bauteil nach Anspruch 1, **dadurch gekennzeichnet, dass** der Ansatz (4b) des oberen Körpers und der untere Körper (3) einen Abwärtsbewegungen des oberen Körpers (4) begrenzenden unteren Anschlag (7) bilden.

3. Bauteil nach Anspruch 1 oder 2, **dadurch gekennzeichnet, dass** dem oberen Anschlag (8) und/oder dem unteren Anschlag (7) eine elastisch wirksame Anschlagschicht (8a) zugeordnet ist.

4. Bauteil nach einem der Ansprüche 1 bis 3, **dadurch gekennzeichnet, dass** der untere Körper (3) und der obere Körper (4) jeweils aus einem Aluminium-Strangpressprofil bestehen.

5. Bauteil nach einem der Ansprüche 1 bis 4, **dadurch gekennzeichnet, dass** die Schicht (5) aus elastischem Werkstoff durch Vulkanisieren oder Kleben mit den beiden Körpern (3, 4) verbunden ist.

6. Bauteil nach einem der Ansprüche 1 bis 5, **dadurch gekennzeichnet, dass** der untere Körper (3) durch Befestigungsschrauben (9) an der Bodenstruktur (2) festlegbar ist.

7. Bauteil nach einem der Ansprüche 1 bis 5, **dadurch gekennzeichnet, dass** der untere Körper (3) durch Kleben an der Bodenstruktur (2) festlegbar ist.

8. Bauteil nach einem der Ansprüche 1 bis 7, **dadurch gekennzeichnet, dass** der obere Körper (4) seitlich angeordnete Leisten (4c) aufweist, von denen jede mit einer auf der Bodenstruktur (2) abgestützten begehbaren Fußbodenplatte (10) in Aufwärtsrichtung zusammenwirkt.

9. Bauteil nach Anspruch 8, **dadurch gekennzeichnet, dass** an der Oberseite jeder Leiste (4c) eine Dichtlippe (11) durch Vulkanisieren oder Kleben gehalten ist, die den Randbereich der Fußbodenplatte (10) überdeckt.

10. Bauteil nach einem der Ansprüche 1 bis 9, **dadurch gekennzeichnet, dass** der obere Körper (4) im Bereich seiner C-förmigen Nut (4a) für die Aufnahme eines Kabels und/oder eines Lichtbandes ausgebildet ist.

## Claims

1. Member for fastening components (1), such as passenger seats, partition walls or the like, to the supporting floor structure (2) of a coach body, in particular of a rail vehicle, formed from two rail-shaped bodies (3, 4) disposed one above the other, which are mutually connected by a layer (5) of elastic material, wherein the lower body (3) can be fixed to the supporting floor structure (2) and the upper body (4) contains a C-shaped groove (4a) to which the component (1) shall be connected by means of at least one sliding block (6), **characterized in that** the upper body (4) has a protrusion (4b) which penetrates the layer (5) of elastic material and engages in the lower body (3), this protrusion (4b) and the lower body (3) being shaped such that an upper stop (8) is formed to limit upward movements of the upper body (4).

2. Member according to Claim 1, **characterized in that** the protrusion (4b) of the upper body (4), and the lower body (3), form a lower stop (7) limiting downward movements of the upper body (4).

3. Member according to Claim 1 or 2, **characterized in that** an elastically working stop layer (8a) is assigned to the upper stop (8) and/or to the lower stop (7).

4. Member according to one of Claims 1 to 3, **characterized in that** the lower body (3) and the upper body (4) respectively consist of an aluminium extrusion profile.

5. Member according to one of Claims 1 to 4, **characterized in that** the layer (5) of elastic material is connected to the two bodies (3, 4) by vulcanization or gluing.

6. Member according to one of Claims 1 to 5, **characterized in that** the lower body (3) can be fixed to the floor structure (2) by fixing bolts (9).

7. Member according to one of Claims 1 to 5, **characterized in that** the lower body (3) can be fixed to the floor structure (2) by gluing.

8. Member according to one of Claims 1 to 7, **characterized in that** the upper body (4) has laterally disposed shoulders (4c), each of which cooperates in the upward direction with a walkable floor panel (10) supported on the floor structure (2).

9. Member according to Claim 8, **characterized in that** on the top side of each shoulder (4c) there is held, by vulcanization or gluing, a sealing lip (11), which covers the marginal region of the floor panel (10).

10. Member according to one of Claims 1 to 9, **characterized in that** the upper body (4), in the region of its C-shaped groove (4a), is configured to receive a cable and/or a light band.

## Revendications

1. Élément pour la fixation de composants (1), tels que des sièges de passager, des cloisons ou éléments similaires, sur la structure de base (2) porteuse d'une caisse de véhicule, en particulier un véhicule ferroviaire, lequel élément est formé par deux corps (3, 4) en forme de rails superposés, qui sont assemblés l'un à l'autre par une couche (5) en matériau élastique, le corps inférieur (3) pouvant être fixé à la structure de base (2) porteuse et le corps supérieur (4) comportant une rainure (4a) en forme de C, dans laquelle sont assemblés les composants (1) par l'intermédiaire d'au moins un coulisseau (6), **caractérisé en ce que** le corps supérieur (4) comporte une saillie (4b) qui traverse la couche (5) en matériau élastique et s'engage dans le corps inférieur (3), cette saillie (4b) et le corps inférieur (3) étant formés de telle sorte qu'il se forme une butée supérieure (8) pour limiter les mouvements vers le haut du corps supérieur (4).

2. Élément selon la revendication 1, **caractérisé en ce que** la saillie (4b) du corps supérieur (4) et du corps inférieur (3) forment une butée inférieure (7) pour limiter les mouvements vers le bas du corps supérieur (4).

3. Élément selon la revendication 1 ou 2, **caractérisé en ce qu'**une couche de butée (8a), élastiquement active, est associée à la butée supérieure (8) et/ou à la butée inférieure (7).

4. Élément selon l'une quelconque des revendications 1 à 3, **caractérisé en ce que** le corps inférieur (3) et le corps supérieur (4) sont formés chacun par un profilé extrudé en aluminium.

5. Élément selon l'une quelconque des revendications 1 à 4, **caractérisé en ce que** la couche (5) en matériau élastique est assemblée par vulcanisation ou par collage aux deux corps (3, 4).

6. Élément selon l'une quelconque des revendications 1 à 5, **caractérisé en ce que** le corps inférieur (3) peut être fixé contre la structure de base (2) au moyen de vis de fixation (9).

7. Élément selon l'une quelconque des revendications 1 à 5, **caractérisé en ce que** le corps inférieur (3) peut être fixé par collage à la structure de base (2).

8. Élément selon l'une quelconque des revendications 1 à 7, **caractérisé en ce que** le corps supérieur (4) comporte des rebords (4c), qui sont agencés sur le côté et qui coopèrent chacun dans la direction vers le haut avec un panneau de plancher (10), sur lequel il est possible de marcher et lequel est en appui sur la structure de base (2).

9. Élément selon la revendication 8, **caractérisé en ce que** sur la face supérieure de chaque rebord (4c) est maintenue, par vulcanisation ou par collage, une lèvre d'étanchéité (11), qui couvre la zone de bordure du panneau de plancher (10).

10. Élément selon l'une quelconque des revendications 1 à 9, **caractérisé en ce que** le corps supérieur (4), dans la zone de sa rainure (4a) en forme de C, est configuré pour recevoir un câble et/ou une bande lumineuse.
